# EUROPÄISCHE PATENTSCHRIFT

(11) **EP 2 720 898 B1**
(45) Veröffentlichungstag und Bekanntmachung des Hinweises auf die Patenterteilung: **29.06.2016**
(21) Anmeldenummer: 11799075.4
(22) Anmeldetag: 15.12.2011
(51) Int. Cl.: B60K 31/00, B60W 30/08, B60T 7/04, B60T 7/22, B60T 8/32, G08G 1/16, B60W 10/20, B60W 30/09, B60W 30/095, B60W 10/184

(54) **VERFAHREN ZUR VERHINDERUNG EINER KOLLISION EINES FAHRZEUGES UND FAHRERASSISTENZSYSTEM FÜR EIN FAHRZEUG**
METHOD FOR PREVENTING A COLLISION OF A VEHICLE AND DRIVER ASSISTANCE SYSTEM FOR A VEHICLE
PROCÉDÉ POUR ÉVITER UNE COLLISION D'UN VÉHICULE ET SYSTÈME D'ASSISTANCE DE CONDUITE POUR UN VÉHICULE

(30) Priorität: 15.06.2011 DE 102011106520
(43) Veröffentlichungstag der Anmeldung: 23.04.2014
(73) Patentinhaber: Daimler AG, 70327 Stuttgart (DE)
(72) Erfinder: SCHAAB, Alexander, 71063 Sindelfingen (DE); KLOOS, Alfred, 71287 Weissach (DE); ZIEGLER, Walter, 70569 Stuttgart (DE)
(74) Vertreter: JENSEN & SON
(86) Internationale Anmeldenummer: PCT/EP2011/006337
(87) Internationale Veröffentlichungsnummer: WO 2012/171547

(56) Entgegenhaltungen:
- EP-A2- 1 990 250
- DE-A1- 10 349 211
- DE-A1- 19 806 687
- US-A1- 2010 006 363

## Beschreibung

Die Erfindung betrifft ein Verfahren zur Verhinderung einer Kollision eines Fahrzeuges gemäß dem Oberbegriff des Anspruchs 1. Ferner betrifft die Erfindung ein Fahrerassistenzsystem für ein Fahrzeug zur Durchführung des Verfahrens.

Das gattungsbildende Dokument US 2010/006363 A1 offenbart ein Verfaren zur Verhingderung einer Kollision eines Fahrzeuges mit Merkmalen des Oberbegriffs von Anspruch 1.

Derartige Verfahren und Fahrerassistenzsysteme sind bereits bekannt. EP 1 057 159 B1 offenbart ein Verfahren zur Verhinderung einer Kollision eines Fahrzeugs mit einem vor dem Fahrzeug angeordneten Hindernis. Bei dem Verfahren wird ein erster Abstand zwischen dem Fahrzeug und dem Hindernis berechnet, der mindestens erforderlich ist, um durch einen Bremsvorgang mit maximaler Verzögerung eine Kollision des Fahrzeugs mit dem Hindernis zu vermeiden. Außerdem wird ein zweiter Abstand berechnet, der mindestens erforderlich ist, um durch Vorbeilenken des Fahrzeugs an dem Hindernis eine Kollision des Fahrzeugs mit dem Hindernis zu vermeiden. Ein automatischer Bremsvorgang wird nur dann eingeleitet, wenn der erfasste Abstand sowohl kleiner als der erste berechnete als auch kleiner als der zweite berechnete Abstand ist, d.h. wenn der Fahrer die Kollision weder durch Bremsen noch durch Ausweichen vermeiden kann, und wenn ein Überdeckungsgrad des Fahrzeugs relativ zu dem Hindernis eine vorgegebene Schwelle überschreitet. In die Berechnung gehen eine Fahreraktivität, ein Zustand einer Fahrbahn, ein Beladungszustand und der Überdeckungsgrad des Fahrzeugs relativ zu dem Hindernis ein.

DE 10 2004 056 027 A1 offenbart ein Verfahren zur Verhinderung von Kollisionen oder Verminderung der Kollisionsstärke eines Fahrzeuges mit den Schritten: Erfassen der Geschwindigkeit und Bewegungsrichtung des Fahrzeuges; Detektieren der Lage von Objekten im Fahrzeugumfeld; Erfassen der Geschwindigkeit und der Bewegungsrichtung der Objekte relativ zum Fahrzeug; Vorausberechnen der zukünftigen Lage der Objekte relativ zum Fahrzeug; Bewerten der gegenwärtigen und zukünftigen Lage der Objekte relativ zum Fahrzeug; Ausgabe einer Warnung an den Fahrer und/oder Durchführen eines automatischen Lenk- und/oder Bremseingriffs durch ein Assistenzsystem des Fahrzeugs in Abhängigkeit der Bewertung, wenn eine Kollision mit einem Objekt gemäß der Bewertung ohne Systemeingriff unausweichlich ist. Die Bewertung basiert auf der Ermittelung von zwei Handlungszeitspannen (time-to-brake und time-to-avoid), die verbleibende Zeit bis zum spätesten Zeitpunkt für die Einleitung eines kollisionsvermeidenden Bremseingriffs bzw. für die Einleitung eines kollisionsvermeidenden Ausweichmanövers.

Der Erfindung liegt die Aufgabe zu Grunde, ein verbessertes Verfahren zur Verhinderung einer Kollision eines Fahrzeuges sowie ein Fahrerassistenzsystem für ein Fahrzeug zur Durchführung des Verfahrens anzugeben.

Die Aufgabe wird erfindungsgemäß hinsichtlich des Verfahrens durch die Merkmale des Anspruchs 1 und hinsichtlich des Fahrerassistenzsystems durch die Merkmale des Anspruchs 9 gelöst.

Vorteilhafte Ausgestaltungen der Erfindung sind Gegenstand der Unteransprüche.

Bei dem erfindungsgemäßen Verfahren zur Verhinderung einer Kollision eines Fahrzeuges wird laufend eine Betätigung eines Bremspedals des Fahrzeugs erfasst und es wird auf eine Kollisionsgefahr geschlossen, wenn das Bremspedal mit einer Betätigungsgeschwindigkeit, die eine vorgegebene Mindestbetätigungsgeschwindigkeit überschreitet, und um einen Betätigungsbetrag, der einen vorgegebenen Mindestbetätigungsbetrag überschreitet, betätigt wird. Ferner werden eine Lage und eine Bewegung von Objekten in einem Fahrzeugumfeld relativ zum Fahrzeug erfasst und hinsichtlich der Kollisionsgefahr bewertet. Bei erkannter Kollisionsgefahr wird automatisch ein Ausweichmanöver des Fahrzeuges durchgeführt, wenn die Bewertung der Kollisionsgefahr ergibt, dass eine Kollision durch ein Ausweichmanöver, aber nicht durch ein Bremsmanöver verhindert werden kann.

Erfindungsgemäß wird somit ein automatisches Ausweichmanöver des Fahrzeuges eingeleitet, wenn eine drohende Kollision erkannt wird, die nur noch durch ein Ausweichmanöver, aber nicht mehr durch ein Bremsmanöver verhindert werden kann. Erfindungsgemäß wird somit Bremsmanövern der Vorzug vor Ausweichmanövern gegeben. Dadurch wird vorteilhaft berücksichtigt, dass Ausweichmanöver in der Regel riskanter als Bremsmanöver sind, da ein Ausweichen weitere Kollisionsgefahren, beispielsweise mit entkommenden Fahrzeugen, verursachen kann und leichter dazu führen kann, dass der Fahrer die Kontrolle über das Fahrzeug verliert.
Erfindungsgemäß wird eine Kollisionsgefahr ferner durch ein schnelles Betätigen des Bremspedals des Fahrzeuges erkannt und anhand der Lage und Bewegung von Objekten in einem Fahrzeugumfeld bewertet. Dabei wird ausgenutzt, dass ein schnelles Betätigen des Bremspedals eine Kollisionsgefahr signalisiert, da Fahrer dazu neigen, eine drohende Kollision durch scharfes Bremsen zu verhindern. Durch die Erfassung und Bewertung der Lage und Bewegung von Objekten in einem Fahrzeugumfeld kann vorteilhaft ermittelt werden, ob die Kollisionsgefahr tatsächlich besteht und ob sie durch Abbremsen oder Ausweichen des Fahrzeuges verhindert werden kann.

Ausführungsbeispiele der Erfindung werden im Folgenden anhand von Zeichnungen näher erläutert.

Dabei zeigen:
- Fig. 1: ein Blockdiagramm eines Fahrerassistenzsystems zur Verhinderung einer Kollision eines Fahrzeuges gemäß dem erfindungsgemäßen Verfahren und
- Fig. 2: ein Ablaufdiagramm eines erfindungsgemäßen Verfahrens zur Verhinderung einer Kollision eines Fahrzeuges.

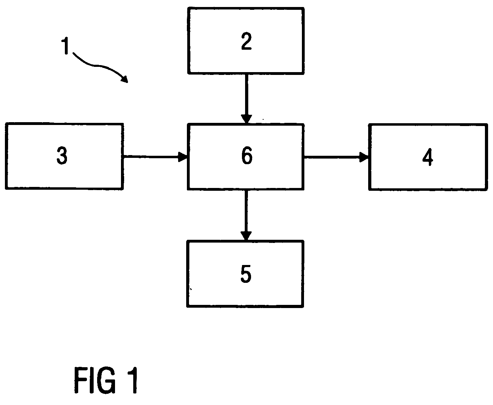

Figur 1 zeigt ein Blockdiagramm eines Fahrerassistenzsystems 1 zur Verhinderung einer Kollision eines Fahrzeuges gemäß einem erfindungsgemäßen Verfahren. Das Fahrerassistenzsystem 1 umfasst wenigstens einen Umgebungssensor 2, z.B. einen Radar-, Lidar-, Video- oder Ultraschallsensor, zum Erfassen der Lage und Bewegung von Objekten in einem Fahrzeugumfeld relativ zu dem Fahrzeug, einen Bremspedalsensor 3 zur Erfassung einer Betätigungsgeschwindigkeit und eines Betätigungsbetrages eines Bremspedals des Fahrzeuges, einen Lenkungsassistenten 4 zur automatischen Lenkung des Fahrzeuges, einen Bremsassistenten 5 zur automatischen Beeinflussung eines Bremssystems der Fahrzeugs sowie eine Steuereinheit 6 zur Bewertung der Kollisionsgefahr anhand von Signalen des wenigstens einen Umgebungssensors 2, zur Auswertung der Signale des Bremspedalsensors 3 und zur Steuerung des Lenkungsassistenten 4 und des Bremsassistenten 5.

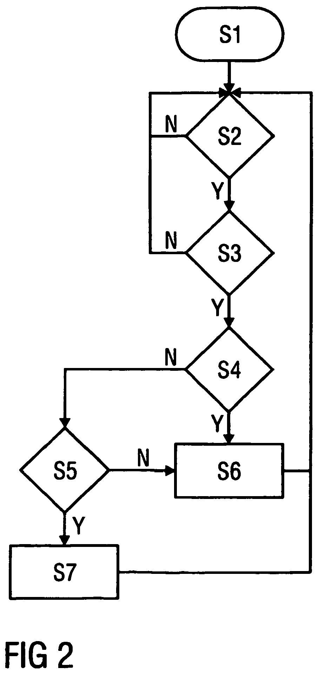

Figur 2 zeigt ein Ablaufdiagramm eines erfindungsgemäßen Verfahrens.

Bei dem Verfahren wird in einem ersten Verfahrensschritt S1 das Fahrerassistenzsystem 1 aktiviert. Die Aktivierung erfolgt dabei vorzugsweise automatisch beim Starten des Fahrzeuges.

In einem zweiten Verfahrensschritt S2 werden mittels des wenigstens einen Umgebungssensors 2 die Lage und Bewegung von Objekten in einem Fahrzeugumfeld erfasst. Ferner werden mittels des Bremspedalsensors 3 eine Betätigungsgeschwindigkeit und ein Betätigungsbetrag des Bremspedals erfasst. Außerdem werden die von dem Umgebungssensor 2 und dem Bremspedalsensor 3 erfassten Signale der Steuereinheit 6 zugeführt und es wird mittels der Steuereinheit 6 geprüft, ob die erfasste Betätigungsgeschwindigkeit des Bremspedals eine vorgegebene Mindestbetätigungsgeschwindigkeit überschreitet und ob der erfasste Betätigungsbetrag einen vorgegebenen Mindestbetätigungsbetrag überschreitet.

Wenn die erfasste Betätigungsgeschwindigkeit des Bremspedals die vorgegebene Mindestbetätigungsgeschwindigkeit nicht überschreitet oder der erfasste Betätigungsbetrag den vorgegebenen Mindestbetätigungsbetrag nicht überschreitet, wird der zweite Verfahrensschritt S2 wiederholt. Andernfalls wird ein dritter Verfahrensschritt S3 ausgeführt.

In dem dritten Verfahrensschritt S3 wird mittels der Steuereinheit 6 anhand der von dem Umgebungssensor 2 erfassten Signale geprüft, ob eine Kollision des Fahrzeugs mit einem Objekt in der Fahrzeugumgebung droht. Dazu wird insbesondere geprüft, ob sich in der Fahrzeugumgebung ein eine Kollisionsgefahr verursachendes Objekt befindet und wie sich ein solches Objekt relativ zu dem Fahrzeug bewegt. Zu dieser Prüfung werden Methoden verwendet, die beispielsweise aus der DE 10 2004 056 027 A1 bekannt sind und daher hier nicht näher erläutert werden.

Wenn das Ergebnis des dritten Verfahrensschrittes S3 ist, dass keine Kollision droht, wird das Verfahren mit dem zweiten Verfahrensschritt S2 fortgesetzt. Andernfalls wird ein vierter Verfahrensschritt S4 ausgeführt.

In dem vierten Verfahrensschritt S4 wird geprüft, ob die drohende Kollision noch durch ein Bremsmanöver verhindert werden kann. Dazu wird ermittelt, ob die Kollision durch ein Bremsmanöver mit einer vorgegebenen Maximalverzögerung verhindert werden kann. Optional wird zusätzlich eine Bremshandlungszeitspanne (so genannte time-to-brake) ermittelt, die eine Zeitspanne angibt, innerhalb derer ein Bremsmanöver eingeleitet werden muss, um eine Kollision zu vermeiden, d.h. eine Zeitspanne, die noch bis zu dem Zeitpunkt verbleibt, zu dem spätestens eine Bremsung eingeleitet werden muss, um die Kollision gerade noch zu vermeiden.

Wenn das Ergebnis des vierten Verfahrensschrittes S4 ist, dass die drohende Kollision nicht mehr durch ein Bremsmanöver verhindert werden kann, wird ein fünfter Verfahrensschritt S5 ausgeführt. Andernfalls wird in einem sechsten Verfahrensschritt S6 der Bremsassistent 5 zur Kollisionsvermeidung aktiviert.

In dem fünften Verfahrensschritt S5 wird geprüft, ob die Kollision durch ein hinreichend sicheres Ausweichmanöver verhindert werden kann. Dazu wird eine maximale Querbeschleunigung ermittelt, die ein Ausweichmanöver mit einem vorgegebenen Sicherheitsabstand zu dem Objekt erzeugen würde, und die ermittelte maximale Querbeschleunigung wird mit einem vorgegebenen Schwellenwert verglichen. Es wird darauf geschlossen, dass die Kollision durch ein hinreichend sicheres Ausweichmanöver verhindert werden kann, wenn die ermittelte maximale Querbeschleunigung kleiner als der Schwellenwert ist. Andernfalls wird darauf geschlossen, dass die Kollision nicht durch ein hinreichend sicheres Ausweichmanöver verhindert werden kann. Dabei gibt der Schwellenwert einen Wert der Querbeschleunigung an, der nicht überschritten werden sollte, damit das Ausweichmanöver stabil gefahren werden kann.

Optional wird in dem fünften Verfahrensschritt S5 zusätzlich eine Ausweichhandlungszeitspanne (sogenannte time-to-avoid) ermittelt, die eine Zeitspanne angibt, innerhalb derer ein Ausweichmanöver eingeleitet werden muss, um eine Kollision zu vermeiden, d.h. eine Zeitspanne, die noch bis zu dem Zeitpunkt verbleibt, zu dem das Ausweichmanöver spätestens eingeleitet werden muss, um eine Kollision durch Ausweichen gerade noch zu vermeiden.

Wenn das Ergebnis des fünften Verfahrensschrittes S5 ist, dass die drohende Kollision nicht mehr durch ein hinreichend sicheres Ausweichmanöver verhindert werden kann, wird der sechste Verfahrensschritt S6 ausgeführt, d.h. es wird der Bremsassistent 5 zur Minderung der Unfallschwere aktiviert. Andernfalls wird ein siebter Verfahrensschritt S7 ausgeführt.

In dem siebten Verfahrensschritt S7 wird automatisch ein mittels der Steuereinheit 6 gesteuertes Ausweichmanöver ausgeführt. Dabei wird die Querbewegung des Fahrzeugs mittels des Lenkungsassistenten 4 durch einen Lenkeingriff, einen Bremseingriff (Einzelradbremsung) oder eine Fahrwerkverspannung bewirkt.

In einer Ausgestaltung des siebten Verfahrensschrittes S7 wird während des automatischen Ausweichmanövers eine Auswirkung der Betätigung des Bremspedals auf eine Bremsverzögerung des Fahrzeuges reduziert oder ganz unterdrückt. Dadurch wird ein Abbremsen des Fahrzeuges während des Gierens reduziert oder verhindert und somit die Fahrstabilität des Fahrzeugs während des Ausweichmanövers vorteilhaft erhöht.

Nach dem sechsten Verfahrensschritt S6 und nach dem siebten Verfahrensschritt S7 wird das Verfahren mit dem zweiten Verfahrensschritt S2 fortgesetzt.

Das Verfahren wird beendet, wenn das Fahrerassistenzsystem 1 abgeschaltet wird. Dies erfolgt vorzugsweise automatisch, wenn das Fahrzeug gestoppt wird. Ferner kann vorgesehen sein, dass das Fahrerassistenzsystem 1 zusätzlich manuell abgeschaltet werden kann.

## Patentansprüche

1. Verfahren zur Verhinderung einer Kollision eines Fahrzeuges, wobei eine Lage und eine Bewegung von Objekten in einem Fahrzeugumfeld relativ zum Fahrzeug erfasst und hinsichtlich einer Kollisionsgefahr bewertet werden, und wobei in Abhängigkeit der Bewertung der Kollisionsgefahr automatisch in ein Bremssystem und/oder ein Lenksystem des Fahrzeugs eingegriffen wird, wenn gemäß der Bewertung eine Kollision des Fahrzeuges mit einem Objekt ohne Systemeingriff unausweichlich ist, wobei
laufend eine Betätigung eines Bremspedals des Fahrzeugs erfasst wird und auf eine Kollisionsgefahr geschlossen wird, wenn das Bremspedal mit einer Betätigungsgeschwindigkeit, die eine vorgegebene Mindestbetätigungsgeschwindigkeit überschreitet, und um einen Betätigungsbetrag, der einen vorgegebenen Mindestbetätigungsbetrag überschreitet, betätigt wird, und
**dadurch gekennzeichnet, dass**
bei einer erkannten Kollisionsgefahr automatisch ein Ausweichmanöver durchgeführt wird, wenn die Bewertung der Kollisionsgefahr ergibt, dass eine Kollision durch ein Ausweichmanöver, aber nicht durch ein Bremsmanöver verhindert werden kann.

2. Verfahren nach Anspruch 1,
**dadurch gekennzeichnet, dass**
bei der Bewertung der Kollisionsgefahr als ein erstes Bewertungskriterium ermittelt wird, ob eine Kollision durch ein Bremsmanöver mit einer vorgegebenen Maximalverzögerung verhindert werden kann, und dass das erste Bewertungskriterium verwendet wird, um zu entscheiden, ob die Kollision durch ein Bremsmanöver verhindert werden kann.

3. Verfahren nach einem der vorhergehenden Ansprüche,
**dadurch gekennzeichnet, dass**
bei der Bewertung der Kollisionsgefahr eine Bremshandlungszeitspanne ermittelt wird, die eine Zeitspanne angibt, innerhalb derer ein Bremsmanöver eingeleitet werden muss, um eine Kollision zu vermeiden, und dass anhand der ermittelten Bremshandlungszeitspanne entschieden wird, ob die Kollision durch ein Bremsmanöver verhindert werden kann.

4. Verfahren nach einem der vorhergehenden Ansprüche,
**dadurch gekennzeichnet, dass**
bei der Bewertung der Kollisionsgefahr als ein zweites Bewertungskriterium ermittelt wird, ob das Fahrzeug dem Objekt mit einem vorgegebenen Sicherheitsabstand ausweichen kann, und dass das zweite Bewertungskriterium verwendet wird, um zu entscheiden, ob die Kollision durch ein Ausweichmanöver verhindert werden kann.

5. Verfahren nach Anspruch 4,
**dadurch gekennzeichnet, dass**
eine maximale Querbeschleunigung ermittelt wird, die ein Ausweichmanöver mit dem Sicherheitsabstand zu dem Objekt erzeugen würde, und die ermittelte maximale Querbeschleunigung mit einem vorgegebenen Schwellenwert verglichen wird, und dass darauf geschlossen wird, dass die Kollision durch ein Ausweichmanöver verhindert werden kann, wenn die ermittelte maximale Querbeschleunigung kleiner als der Schwellenwert ist, und dass darauf geschlossen wird, dass die Kollision nicht durch ein Ausweichmanöver verhindert werden kann, wenn die ermittelte maximale Querbeschleunigung größer als der Schwellenwert ist.

6. Verfahren nach einem der vorhergehenden Ansprüche,
**dadurch gekennzeichnet, dass**
bei der Bewertung der Kollisionsgefahr eine Ausweichhandlungszeitspanne ermittelt wird, die eine Zeitspanne angibt, innerhalb derer ein Ausweichmanöver eingeleitet werden muss, um eine Kollision zu vermeiden, und dass anhand der ermittelten Ausweichhandlungszeitspanne entschieden wird, ob die Kollision durch ein Ausweichmanöver verhindert werden kann.

7. Verfahren nach einem der vorhergehenden Ansprüche,
**dadurch gekennzeichnet, dass**
das automatische Ausweichmanöver durch einen automatischen Lenkeingriff und/oder einen automatischen Bremseingriff und/oder eine automatische Fahrwerkverspannung durchgeführt wird.

8. Verfahren nach einem der vorhergehenden Ansprüche,
**dadurch gekennzeichnet, dass**
während des automatischen Ausweichmanövers eine Auswirkung der Betätigung des Bremspedals auf eine Bremsverzögerung des Fahrzeuges reduziert wird.

9. Fahrerassistenzsystem (1) für ein Fahrzeug zur Durchführung des Verfahrens nach einem der vorhergehenden Ansprüche, umfassend wenigstens einen Umgebungssensor (2) zum Erfassen der Lage und Bewegung von Objekten in einem Fahrzeugumfeld relativ zu dem Fahrzeug, einen Lenkungsassistenten (4) zur automatischen Lenkung des Fahrzeuges und eine Steuereinheit (6) zur Bewertung der Kollisionsgefahr anhand von Signalen des wenigstens einen Umgebungssensors (2) und zur Steuerung des Lenkungsassistenten (4), **gekennzeichnet durch** wenigstens einen Bremspedalsensor (3) zur Erfassung einer Betätigungsgeschwindigkeit und eines Betätigungsbetrages des Bremspedals, wobei von dem wenigstens einen Bremspedalsensor (3) erfasste Signale der Steuereinheit (6) zuführbar und von der Steuereinheit (6) auswertbar sind.

## Claims

1. Method for preventing a collision of a vehicle, wherein a position and a movement of objects relative to the vehicle are detected in the area surrounding the vehicle and evaluated in relation to a collision risk, and wherein, depending upon the evaluation of the collision risk, an intervention is automatically carried out into a braking system and / or a steering system of the vehicle if, according to the evaluation, a collision of the vehicle with an object is inevitable without system intervention,
wherein an activation of a brake pedal of the vehicle is constantly detected and a collision risk is concluded if the brake pedal is activated at an activation speed exceeding a predefined minimum activation speed and by an activation amount exceeding a predefined minimum activation amount, and
**characterised in that**
in the event of detection of a collision risk an evasive manoeuvre is automatically carried out if the evaluation of the collision risk shows that a collision can be prevented by an evasive manoeuvre but not by a braking manoeuvre.

2. Method according to claim 1,
**characterised in that**
in the evaluation of the collision risk it is determined as a first evaluation criterion whether a collision can be prevented by a braking manoeuvre with a predefined maximum delay, and the first evaluation criterion is used to decide whether the collision can be prevented by a braking manoeuvre.

3. Method according to one of the preceding claims,
**characterised in that**
in the evaluation of the collision risk a brake action timeframe is determined which indicates a timeframe, within which a braking manoeuvre must be initiated in order to avoid a collision, and it is decided by reference to the determined brake action timeframe whether the collision can be prevented by a braking manoeuvre.

4. Method according to one of the preceding claims,
**characterised in that**
in the evaluation of the collision risk it is determined as a second evaluation criterion whether the vehicle can avoid the object at a predefined safe distance, and the second evaluation criterion is used to decide whether the collision can be prevented by an evasive manoeuvre.

5. Method according to claim 4,
**characterised in that**
a maximum lateral acceleration is determined which would produce an evasive manoeuvre at the safe distance from the object, and the maximum lateral acceleration determined is compared with a predefined threshold value, and it is concluded that the collision can be prevented by an evasive manoeuvre if the determined maximum lateral acceleration is less than the threshold value, and it is concluded that the collision cannot be prevented by an evasive manoeuvre if the determined maximum lateral acceleration is greater than the threshold value.

6. Method according to one of the preceding claims,
**characterised in that**
in the evaluation of the collision risk an evasive action timeframe is determined which indicates a timeframe, within which an evasive manoeuvre must be initiated in order to avoid a collision, and it is decided by reference to the determined evasive action timeframe whether the collision can be prevented by an evasive manoeuvre.

7. Method according to one of the preceding claims,
**characterised in that**
the automatic evasive manoeuvre is carried out by an automatic steering intervention and / or an automatic braking intervention and / or an automatic bracing of the chassis.

8. Method according to one of the preceding claims,
**characterised in that**
during the automatic evasive manoeuvre an effect of the activation of the brake pedal on a braking delay of the vehicle is reduced..

9. Driver assistance system (1) for a vehicle to carry out the method according to one of the preceding claims, comprising at least one proximity sensor (2) to detect the position and movement of objects relative to a vehicle in the area of the vehicle, a steering assistant (4) for automatic steering of the vehicle and a control unit (6) to evaluate the collision risk by reference to signals of the at least one proximity sensor (2) and to control the steering assistant (4),
**characterised by** at least one brake pedal sensor (3) to detect an activation speed and an activation amount of the brake pedal, wherein signals detected by the at least one brake pedal sensor (3) can be fed to the control unit (6) and evaluated by the control unit (6).

## Revendications

1. Procédé destiné à empêcher une collision d'un véhicule automobile, une position et un mouvement des objets dans l'environnement du véhicule automobile étant détectés par rapport au véhicule et évalués en termes de risque de collision et en fonction de l'évaluation du risque de collision intervenant automatiquement dans un système de freinage et/ou de direction du véhicule automobile lorsque selon l'évaluation une collusion du véhicule automobile avec un objet est inévitable sans intervention du système, un actionnement d'une pédale de frein du véhicule automobile étant détecté en continu et le système en concluant à un risque de collision lorsque la pédale de frein est actionnée à une vitesse d'actionnement qui dépasse une vitesse d'actionnement minimum et qui dépasse d'une ampleur d'actionnement minimum définie, et **caractérisé en ce qu'**en cas de risque de collision reconnu une manoeuvre d'évitement est automatiquement exécutée lorsque l'évaluation du risque de collision indique qu'une collision peut être évitée par une manoeuvre d'évitement et non par une manoeuvre de freinage.

2. Procédé selon la revendication 1, **caractérisé en ce que** lors de l'évaluation du risque de collusion en tant que premier critère d'évaluation il est déterminé si une collision peut être évitée par une manoeuvre de freinage présentant une temporisation maximum définie et que le premier critère d'évaluation est utilisé pour décider si la collision peut être évité par une manoeuvre de freinage.

3. Procédé selon l'une quelconque des revendications précédentes, **caractérisé en ce que** lors de l'évaluation du risque de collision il est déterminé un laps de temps de traitement de freinage qui indique un laps de temps durant lequel une manoeuvre de freinage doit être commencée pour éviter une collision et **en ce qu'**au moyen du laps de temps de traitement de freinage il est décidé si la collision peut être évitée par une manoeuvre de freinage.

4. Procédé selon l'une quelconque des revendications précédentes, **caractérisé en ce que** lors de l'évaluation du risque de collusion en tant que second critère d'évaluation il est déterminé si le véhicule peut éviter l'objet en observant une distance de sécurité prédéfinie et que le second critère d'évaluation est utilisé pour décider si la collision peut être évitée par une manoeuvre d'évitement.

5. Procédé selon la revendication 4, **caractérisé en ce qu'**il est déterminé une vitesse transversale maximale qui produirait une manoeuvre d'évitement par respect d'une distance de sécurité par rapport à l'objet et la vitesse transversale maximale déterminée est comparée à une valeur seuil prédéfinie et **en ce qu'**il en est conclu que la collision peut être évitée par une manoeuvre d'évitement lorsque la vitesse transversale maximale déterminée est inférieure à la valeur seuil et **en ce qu'**il en est conclu que la collision ne peut pas être évitée par une manoeuvre d'évitement lorsque la vitesse transversale maximale déterminée est supérieure à la valeur seuil.

6. Procédé selon l'une quelconque des revendications précédentes, **caractérisé en ce que** lors de l'évaluation du risque de collision il est déterminé un laps de temps de traitement d'évitement qui indique un laps de temps durant lequel une manoeuvre d'évitement doit être commencée pour éviter une collision et **en ce qu'**au moyen du laps de temps de traitement d'évitement il est décidé si la collision peut être évitée par une manoeuvre d'évitement.

7. Procédé selon l'une quelconque des revendications précédentes, **caractérisé en ce que** la manoeuvre d'évitement automatique est réalisée par une intervention de direction automatique et/ou une intervention de freinage automatique et/ou une déformation du mécanisme de roulement.

8. Procédé selon l'une quelconque des revendications précédentes, **caractérisé en ce qu'**au cours de la manoeuvre d'évitement automatique un effet de l'actionnement de la pédale de freine est réduit sur une temporisation de freinage du véhicule automobile.

9. Système (1) d'assistance au conducteur pour un véhicule automobile destiné à exécuter le procédé selon l'une quelconque des revendications précédentes, comprenant au moins un capteur (2) d'environnement destiné à détecter la position et le mouvement d'objets dans un environnement de véhicule automobile par rapport au véhicule automobile, un assistant (4) de direction destiné à diriger automatiquement le véhicule automobile et une unité (6) de commande destinée à évaluer le risque de collusion au moyen de signaux de l'au moins un capteur (2) d'environnement et destinée à commander l'assistant (4) de direction, **caractérisé par** au moins un capteur (3) de pédale de frein destiné à détecter une vitesse d'actionnement et une ampleur d'actionnement de la pédale de frein, les signaux détectés par l'au moins un capteur (3) de pédale de frein pouvant être amenés à l'unité (6) de commande et pouvant être évalués par l'unité (6) de commande.
